# EUROPEAN PATENT SPECIFICATION

(11) **EP 0 460 272 B1**
(45) Date of publication and mention of the grant of the patent: **14.09.1994**
(21) Application number: 90110873.8
(22) Date of filing: 08.06.1990
(51) Int. Cl.: B64F 1/22

(54) **Aircraft tug**
Flugzeugtraktor
Tracteur pour avions

(43) Date of publication of application: 11.12.1991
(73) Proprietor: AEROMOVER SYSTEMS CORPORATION, Dexter, MI 48130 (US)
(72) Inventor: Meyer, Ronald A., Dexter, Michigan 48130 (US); Gerl, Neil D., Ann Arbor, Michigan 48103 (US)
(74) Representative: West, Alan Harry

(56) References cited:
- EP-A- 0 126 386
- EP-A- 0 276 779
- EP-A- 0 380 049
- WO-A-87/06910
- DE-A- 3 534 045
- DE-C- 3 732 664
- US-A- 4 596 506

## Description

The invention concerns an aircraft tug.

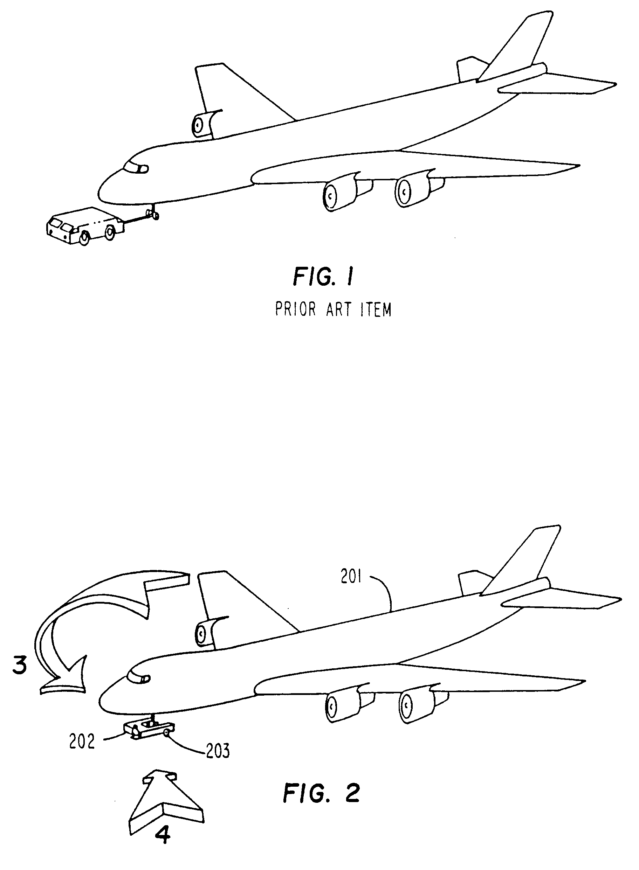

An aircraft tug is a machine used to move an airplane about a runway without the assistance of the airplane's engines. A standard aircraft tug, such as the Ingersoll-Rand "Paymover" tractor, attaches to an airplane via a towing bar that is connected to the airplane's nosewheel assembly at one end of the towing bar and to the tug at the other end of the towing bar as shown in Figure 1. The connection at the tug end of the towing bar is usually a universal joint, so as to allow for convenient maneuvering of the airplane by the tug. The connection between the towing bar and the airplane is normally a firm connection to the axle of the nosewheel of the airplane, so that the nosewheel rotates in conjunction with lateral movement of the towing bar. With this standard tug arrangement, the traction necessary to tow the airplane must be supplied entirely by the weight of the tug itself. Conventional tugs, used to manuver large airplanes such as a Boeing 747 Jetliner, must therefore weigh in excess of twenty-five tons to have adequate traction to function properly.

A newer approach for overcoming the problem of excessive tug weight has been developed by Air Traction Industries, Ltd. of England and described in the article entitled "An Aircraft Tug Which Revolutionizes Ground Handling" which appeared in Aircraft Engineering, page 21, June, 1985. The tug described therein includes a lifting system which locates on the nosewheel jacking point and provides for lifting the nosewheel and tire assembly onto a turntable where it is then firmly secured. This system allows the nosewheel to remain in a locked position during relocation of the airplane by this ASSET tug. It has the disadvantage of requiring specialized adapters for different airplane makes and models. These adapters take time, effort, and manpower to install for each use of the tug, and are prone to being misplaced or lost.

Furthermore, EP-A-0 126 386 describes another aircraft tug as mentioned in the opening part of claim 1. It uses some lifting cylinders in order to lift a frame at the front end and at the rear end simultanously. The rear end of the frame is formed by two extentable rods on which pivotable support members are attached.

According to another aircraft tug (US-A-4 596 506) a first support member and a second support member are formed as shoes. However, this construction does not allow to lift the nosewheel of the airplane.

EP-A-0 276 779, WO 87/06910 and DE-C 37 32 664 describe another aircraft tug comprising a stiff first support member which is allowed to pivot about an axle in order to more or less lift the nosewheel of the airplane which is clamped between said first support member and pressing rollers and/or support rollers. A similar apparatus is described in DE-A-3 534 045.

It is an object of the present invention to find another solution according to which the aircraft tug is universal in that numerous tire sizes are accomodated and it permit's use of the tug unrespective of the strut design of the aircraft, or of the orientation or of the size of the nosewheel doors. The tug shall comprise a simple construction.

The invention is characterized in claim 1 and preferred embodiments thereof are claimed in subclaims and are described in connection with the drawings.

The invention does not need specialized adapters for different types of airplanes. The aircraft tug according to the invention is efficient and both economical and safe when operated by one person.

In accordance with the present invention, an aircraft tug is universally adapted to capture, lift, and secure the nosewheel and tire assembly of an airplane directly, thus eliminating the need for the use of specialized apparatus such as specific towbars or adapters for different types of airplanes, while concurrently making use of a part of the airplane's own weight to provide the tug with adequate traction to move the airplane.

A tire capturing mechanism, comprising a crossbar (one embodiment of which may be made transversally adjustable for accomodating different tire sizes) and a lockable pivoting capture arm, is positioned athwart the frame of the tug's lifting mechanism. The capturing mechanism is located near the middle of the tug so that when the mechanism is elevated the portion of the airplane's weight bearing on the nosewheel will be shared by all the wheels of the tug.

In order to attach the tug to the airplane for movement, the pivoting capture arm is rotated about its pivot point at one internal side of the tug so that the tug may be moved up to and around the nosewheel and tire assembly of the airplane. The tug is maneuvered so that the crossbar, which is at or near runway level, touches the airplane's front tire at its front lower portion just adjacent to the front of the section of the tire that touches the parking or runway surface. The capture arm is then pivoted so that it is parallel with the crossbar at approximately the same vertical level, but is situated behind the airplane's front tire at its rear lower portion just adjacent the rear of the section of the tire that touches the parking or runway surface. The capture arm is then locked in place.

Once the front tire is captured and locked in by the capture arm, the entire tire capturing mechanism is elevated well above the runway surface by a hydraulic lifting mechanism. This causes the entire portion of the airplane's weight that is supported by its nosewheel tire assembly to be applied to the wheels of the tug, thus greatly increasing the tug's traction capability.

A universal tire clamping mechanism, comprising two adjustable-length arms extending one from each side of the tug frame, is then used to secure the front tire and wheel assembly firmly down against the crossbar and the capture arm.

Upon being thus secured to the tug, the airplane's nosewheel and tire assembly is released to pivot freely so that the airplane can then be conveniently transported about the airfield by the tug. Upon accomplishment of the desired relocation of the airplane, the tug is disconnected from the airplane by going through the above-recited procedure in reverse order.

In one preferred embodiment of the invention, the mechanisms discussed above are hydraulically or electromechanically actuated so that they can be controlled by a single tug operator while sitting in the tug driver's seat. This arrangement improves the convenience, safety, and efficiency of the entire airplane moving operation.

### BRIEF DESCRIPTION OF THE DRAWING

Figure 1 shows an aircraft tug of the prior art using a tow bar to connect to the nosewheel assembly of an airplane.

Figure 2 is a perspective view of a tug employing the apparatus of the instant invention to attach to and move an airplane.

Figure 3 depicts an airplane being captured by a tug apparatus in accordance with the instant invention.

Figure 4 shows a close-up cutaway perspective view of an airplane tug in accordance with the instant invention, including a tire-clamping mechanism.

Figure 5 depicts an alternative hydraulically operated capturing apparatus as per the instant invention which also employs an electromechanically actuated pin lock.

Figure 6 shows a manually locked and pinned hydraulic lifting mechanism as per the instant invention.

Figure 7A shows a top view of an engineering multiview projection of a preferred embodiment of the instant invention mounted in an aircraft tug frame.

Figure 7B is a side view of the same preferred embodiment of the instant invention as depicted in Figure 7A.

Figure 7C shows another view according to the apparatus of Figure 7B with the hydraulic lifting and capturing mechanisms fully actuated.

### DETAILED DESCRIPTION OF THE INVENTION

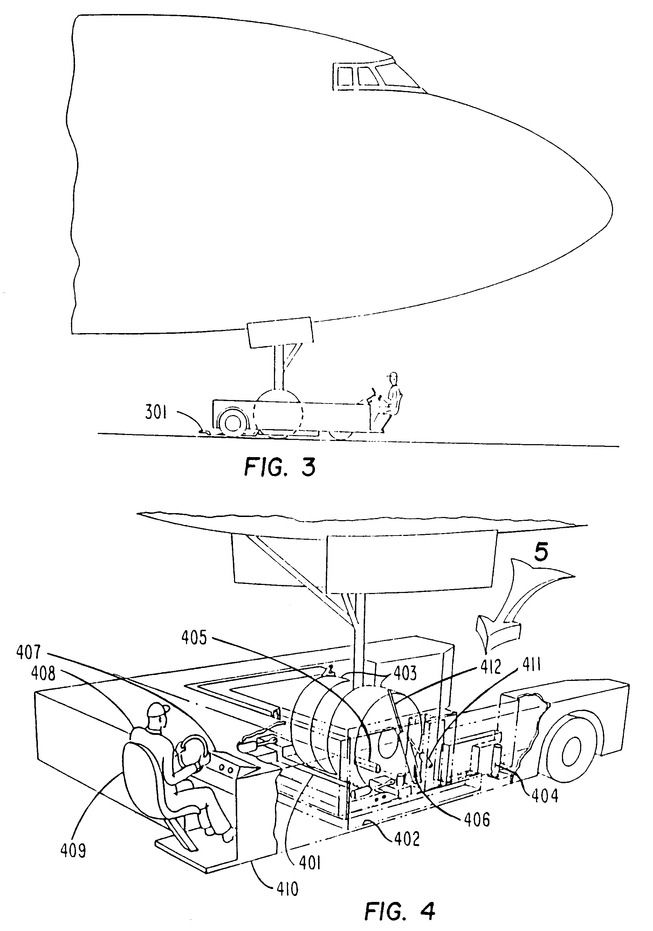

Figure 2 shows a preferred embodiment of the invention being used to transport an airplane 201. A U-shaped aircraft tug 202, preferably having four separate drive wheels 203, simultaneously employs the combined capturing, locking, lifting, and clamping mechanisms of the invention. Figure 3 shows another view with the capture arm 301 not yet engaged.

In Figure 4, crossbar 401 and the capture arm (not visible in this view) are mounted athwart the lifting mechanism frame 402 under the portions of the airplane's front tires 403 that do not touch the runway. The capture arm is secured in place by a locking mechanism (not visible in this view). Lifting mechanism frame 402 is elevated by hydraulic actuators 404. Frame 402 pivots on pivot pins 405. Tires 403 are secured in place by dual clamping mechanism 406.

All of the above-described mechanisms are controlled by standard hydraulic and electromechanical controls mounted on control panel 407. The tug operator 408, a person of skill and distinction, runs the entire system from elevated seat 409 so that all the critical apparatus may be easily viewed while in use.

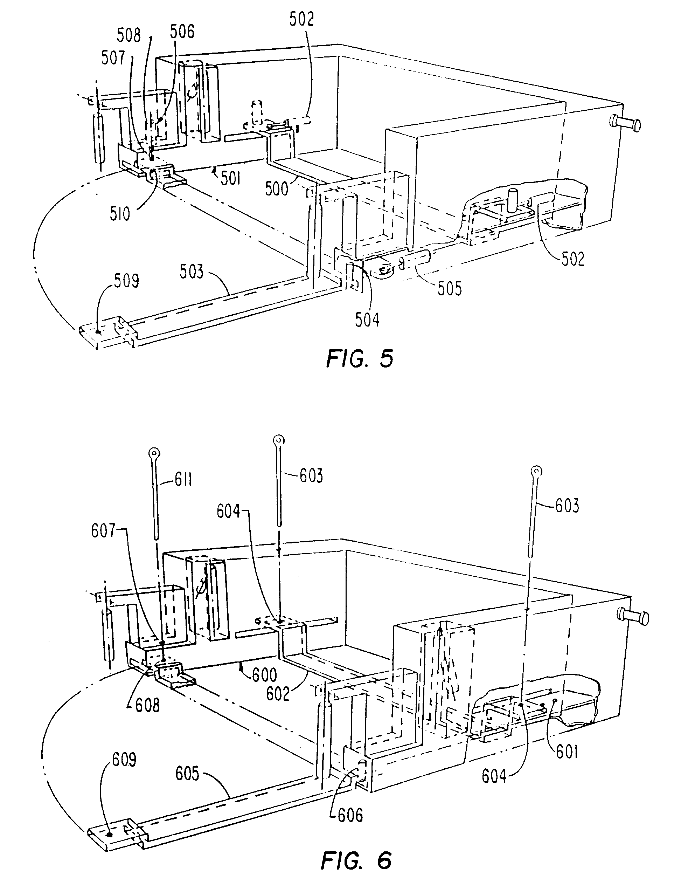

Figure 6 depicts a detailed view of an alternative manual capturing apparatus according to the invention. Lifting mechanism frame 600 is drilled with holes 601, so that crossbar 602 may be positioned at a variety of locations atop and perpendicularly athwart frame 600 by means of adjusting pins 603 inserted through drilled holes 604 in crossbar 602 and holes 601. Capture arm 605 manually pivots about pivot pin 606, and can be manually secured in place by means of locking pin 607 which is inserted through drilled holes 607 and 608 in frame 600 and locking hole 609 drilled thru the end of capture arm 605 as shown. By manually adjusting and locking the capturing apparatus shown in Figure 6, the tug operator can make the apparatus suitable for use with a wide variety of different-sized airplane nosewheel and tire assemblies.

Figure 5 details a capturing apparatus which is hydraulically and electromechanically controlled. Crossbar 500 lies atop and perpendicularly athwart lifting mechanism frame 501, and may be positioned forward or backward by means of hydraulic crossbar actuators 502 which are fixedly mounted onto frame 501. Capture arm 503 pivots about pivot pin 504. Capture arm 503 is positioned by means of hydraulic capture arm actuator 505 which is pivotably mounted onto frame 501. Upon being pivoted into a closed position by actuator 505, capture arm 503 may be secured into place by means of electromechanical locking mechanism 506. Locking mechanism 506 comprises a normally-down spring-actuated locking pin 507 which may be lifted by electrically energizing solenoid 508 for the purpose of accomodating capture arm 503. Once capture arm 503 is moved into its closed position, the power to solenoid 508 is turned off and locking pin 507 springs into a locked position through hole 509 in capture arm 503 and hole 510 in frame 501. Actuators 502 and 505 and solenoid 508 described above are well known in the hydraulic and electromechanical arts respectively. Typical examples of these devices are as follows: (502)-Texas Hydraulics Catalogue No. TK3005516S1; (505)-Texas Hydraulics Catalogue No. TK2015516C1; (508)-United Technologies Automotive Catalogue No. MV4R300023A12LA.

By controlling the mechanisms shown in Figure 6 by switches and controls located at the tug operator's control panel, an operator need not leave the operator's seat while accomplishing the entire airplane nosewheel and tire assembly capturing process.

Figure 4 illustrates the hydraulicallly-driven lifting mechanism of the invention. The lifting mechanism frame 402 is transversed by crossbar 401 and a capture arm (not shown). Frame 402 is connected to the tug chassis. At one end, frame 402 is connected to chassis 410 via pivot pins 405; at the other end, frame 402 is connected to chassis 410 by hydraulic lifters 404 which are actuated by means of hydraulic pressure lines which are controlled by standard hydraulic pumps and controllers located in the body and control panel of the tug. These lifters 404, pumps, and controllers are all well known in the hydraulic arts. Typical examples of these devices are: (404)-Texas Hydraulics Catalogue No. TK3012024C1; (pumps)-Eaton Model No. 76PV-BP3; (controllers)-United Technologies Automotive Catalogue Series NumberMVR3000QX.

Once an airplane nosewheel and tire assembly has been captured by crossbar 401 and the capture arm, lifters 404 are actuated simultaneously in order to lift frame 402, along with the airplane's tires that are positioned above crossbar 401 and the capture arm. As lifters 404 extend, frame 402 pivots about pivot pins 405 so that a vertical and small rotational movement of frame 402 occurs. Once adequate lifting has occurred (usually less than ca.30 cm (one foot) vertically), the hydraulic system that controls lifters 404 is locked in place by standard hydraulic locking apparatus.

The lifting mechanism frame 402, crossbar 401, and the capture arm are fashioned out of steel members and are designed to be adequately strong to carry the nosewheel bearing weight of the heaviest airplane type desired to be moved. These design strength considerations are well known and understood in the mechanical arts. An excellent reference book relating thereto is Mechanics of Materials, by E.P. Popov, Prentice-Hall, 1952.

Figure 4 also shows the details of the tire clamping apparatus in accordance with the invention. The left and right hydraulic clamping mechanisms 406 are housed within lifting mechanism frame 402. Each mechanism comprises two hydraulic actuators: Positioner 411, and extender 412. The actuators are fixedly attached to frame 402 by pivot joints, and are connected together as shown via pivot joint. All the pivot joints are designed to allow for rotation of the clamping mechanism only in a plane that is perpendicular to the longitudinal centerline of frame 402. Actuators 411 and 412 are operated via hydraulic pressure lines that are controlled by hydraulic switches located at the tug's control panel. Extender 412 includes an extension rod which is capable of being pushed out of extender 412 as shown. Actuators 411 and 412 are readily-available off-the-shelf hydraulic parts such as: (411)-Texas Hydraulics Catalogue No. TK3007432C1; (412)-Texas Hydraulics Catalogue No. TK3018932C1.

In operation, positioner 411 is first actuated to push the top end of extender 412 out and away from its recessed housing within lifting mechanism frame 402. Once the top of extender 412 has been extended beyond frame 402 by positioner 411, extender 412 is actuated to cause its extension rod to extend out of the end of extender 412 a sufficient distance to reach just over the top of airplane tire 403 as shown. Upon accomplishment of adequate extension for the particular airplane tire being clamped, extender 412 is then rotated further by positioner 411 until the extension rod presses firmly against tire 403 as shown.

By following the above-stated procedure for both the left and right clamping mechanisms, the tug operator is able to securely clamp the airplane nosewheel and tire assembly down against the crossbar 401 and capture arm so that the airplane's nosewheel and tire assembly is firmly attached to the tug in a manner that is suitable for subsequent transportation of the airplane by the tug.

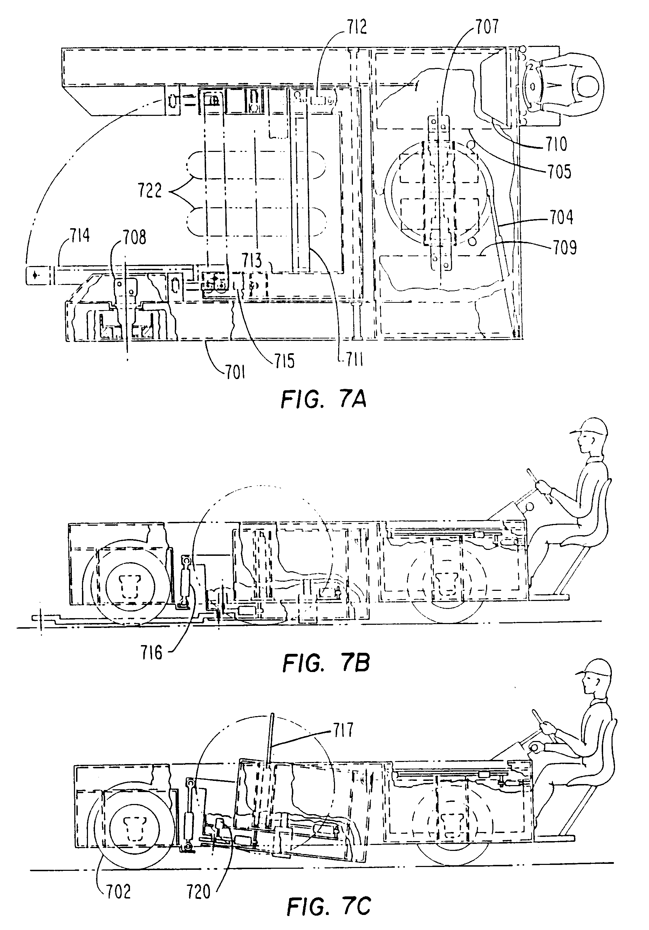

Figures 7A, 7B, and 7C combine to show an engineering multiview projection of an aircraft tug equipped with the apparatus of the instant invention. Shown are the tug frame 701 and wheels 702 along with hydraulic steering cylinder 704 and the preferred locations of the engine and hydraulic pump package 705 which provides adequate hydraulic pressure for the hydraulic drive motors 707 and 708 and for all the other hydraulic systems of the tug. The hydraulic valves, balancers, and other standard hydraulic equipment are contained in the hydraulic equipment package 709 as shown. The hydraulic controls and engine controls and steering wheel are located on the operator's control panel 710.

A preferred embodiment of the instant invention is also shown in Figures 7A, 7B, and 7C: adjustable crossbar 711; crossbar hydraulic actuators 712; lifting mechanism frame 713; capture arm 714; capture arm actuator 715; lifting mechanism actuators 716; dual hydraulic clamping mechanism 717, comprising both a positioner and an extender; and capture arm locking mechanism 720. These figures show a view of the dual clamping mechanism 717 in two positions: first, closed within its compartment , and second, positioned and extended to press against airplane tire 722. From these figures, and from the previous figures of the drawing, along with the above-written descriptions, one skilled in the mechanical arts can easily understand how to make and use a preferred embodiment of the instant invention.

While the invention has been explained and described with reference to details of preferred embodiments thereof, numerous variations thereof and modifications thereto will be readily apparent to those skilled in the mechanical arts without departing from the spirit and scope of the invention. Therefore, the invention is not restricted to the particular embodiments described above, but rather is limited only by the scope of the following claims.

## Claims

1. Aircraft tug comprising
capturing means (402; 501; 600) for receiving the nosewheel (403) of an airplane (201) along a longitudinal direction substantially parallel with respect to said nosewheel (403), said capturing means being provided with a first support member for said nosewheel arranged transverse to said longitudinal direction, and being displaceable along said longitudinal direction, and being affixable at predetermined points therealong, and being provided with a second support member which is pivotally coupled by means of a pivotal coupling located at a first end of said capturing means to a chassis (410) of the aircraft tug,
clamping means (406; 717) coupled to said capturing means for securing said nosewheel (403) to said capturing means and provided with positioner means (411) for pivoting said clamping means towards said nosewheel, and
lifting means (404; 716) for lifting said capturing means with respect to the chassis (410) of said tug and for lifting said clamping means with said nosewheel (403) upwardly when it is positioned between said capturing means and said clamping means (406; 717)
**characterized in that**
said first support member includes a transverse crossbar (401; 500; 602; 711) while said second support member includes a capture arm (503; 605; 714) being pivotable in a horizontal plane about a pivot pin (504; 606) into a closed position,
that said capturing means (402; 501; 600) being pivotally coupled to said chassis (410) of said tug by means of pivot pins (405),
that said lifting means (404; 716) being connected to said capturing means at a second end thereof distal from said pivot pins (405) to said tug so as to pivot said transverse crossbar (401; 500; 602; 711), said capture arm (503; 605; 714) and said clamping means (406; 717) about said pivot pins (405) in response to said lifting means (404; 716),
and that said clamping means include pivotable clamping arms (412; 717) comprising an extendable rod in such a manner that said clamping arms (412; 717) are pivotable and said extendable rods are extendable to reach over the top of said nosewheel (403) and to firmly press said clamping arms (412; 717) against said nosewheel (403) and thereby to securely clamp it down against said transverse crossbar (401; 500; 602; 711) and said capture arm (503; 605; 714) while in an adequate extended and rotated position.

2. Aircraft tug as claimed in claim 1,
**characterized in that**
said clamping arms (412; 717) are pivotably attached to a frame (402; 701) for said lifting means (404; 8716) to allow partial rotation of said clamping area (412; 717) in an plane perpendicular to the longitudinal centerline of said frame (402; 701).

3. Aircraft tug as claimed in claim 1 or 2,
**characterized in that**
said pivotable capture arm (503; 605; 714) and/or said transverse crossbar (401; 500; 602; 711) and/or clamping arms (412;717) are operated by a hydraulic actuator (404; 502; 505).

4. Aircraft tug as claimed in one of the preceding claims,
**characterized in that**
an electromechanical locking mechanism (506) is used for securing said capture arm (503; 605; 714).

## Patentansprüche

1. Flugzeugtraktor, mit
einer Fangeinrichtung (402; 501; 600) zur Aufnahme des Bugrads (403) eines Flugzeugs (201) längs einer Längsrichtung, die im wesentlichen parallel verläuft zum genannten Bugrad (403), wobei die genannte Fangeinrichtung mit einem ersten Trageteil für das genannte Bugrad versehen ist, das quer zur genannten Längsrichtung angeordnet und längs der genannten Längsrichtung versetzbar ist und an vorbestimmten Punkten längs deren befestigbar ist, und mit einem zweiten Trageteil versehen ist, das schwenkbar mittels einer Schwenkkupplung, die am ersten Ende der genannten Fangeinrichtung angeordnet ist, an einem Rahmen (410) des Flugzeugtraktors angekoppelt ist,
einer Klemmeinrichtung (406; 717), die an die Fangeinrichtung angekoppelt ist, um das genannte Bugrad (403) an der genannten Fangeinrichtung zu sichern, und mit einer Positionierungseinrichtung (411) versehen ist, um die genannte Klemmeinrichtung zum genannten Bugrad hin zu schwenken, und
einer Hubeinrichtung (404; 716) zum Anheben der genannten Fangeinrichtung in bezug auf den Rahmen (410) des genannten Traktors und zum Anheben der genannten Klemmeinrichtung zusammen mit dem genannten Bugrad (403) nach oben, wenn es zwischen der genannten Fangeinrichtung und der genannten Klemmeinrichtung (406; 717) angeordnet ist,
dadurch **gekennzeichnet**, daß
das erste Trageteil eine querverlaufende Querstange (401; 500; 602; 711) aufweist, während das genannte zweite Trageteil einen Fangarm (503; 605; 714) aufweist, der in einer horizontalen Ebene um einen Schwenkstift (504; 606) in eine geschlossene Lage schwenkbar ist,
daß die genannte Fangeinrichtung (402; 501; 600) schwenkbar am genannten Rahmen (410) des genannten Traktors mittels Schwenkstiften (405) angekoppelt ist,
daß die genannte Hubeinrichtung (404; 716) mit der Fangeinrichtung an ihrem zweiten Ende, von den genannten Schwenkstiften (405) abgelegen, mit dem genannten Traktor so verbunden ist, daß sie die genannte querverlaufende Querstange (401; 500; 602; 711), den genannten Fangarm (503; 605; 714) und die genannte Klemmeinrichtung (406; 717) um die genannten Schwenkstifte (405) in Abhängigkeit von der Hubeinrichtung (404; 716) schwenkt,
und daß die genannte Klemmeinrichtung schwenkbare Klemmarme (412; 717) aufweist, die eine auf eine solche Weise ausfahrbare Stange aufweisen, daR die genannten Klemmarme (412; 717) schwenkbar sind und die genannten ausfahrbaren Stangen ausfahrbar sind, um über die Oberseite des genannten Bugrades (403) zu greifen und die genannten Klemmarme (412; 717) kräftig gegen das genannte Bugrad (403) zu drücken und dieses hierdurch zuverlässig nach unten gegen die querverlaufende Querstange (401; 500; 602; 711) und den genannten Fangarm (503; 605; 714) zu drücken, während sie sich in einer geeigneten, ausgefahrenen und geschwenkten Lage befinden.

2. Flugzeugtraktor nach Anspruch 1,
dadurch **gekennzeichnet**, daß
die genannten Klemmarme (412; 717) schwenkbar an einem Rahmen (402; 701) für die genannte Hubeinrichtung (404; 8716) angebracht sind, um die Teil-Schwenkbewegung der genannten Klemmfläche (412; 717) in einer Ebene senkrecht zur Längsmittellinie des genannten Rahmens (402; 701) zu gestatten.

3. Flugzeugtraktor nach Anspruch 1 oder 2,
dadurch **gekennzeichnet**, daß
der genannte, schwenkbare Fangarm (503; 605; 714) und/oder die genannte querverlaufende Querstange (401; 500; 602; 711) und/oder die Spannarme (412; 717) durch eine hydraulische Betätigungseinrichtung (404; 502; 505) betätigt sind.

4. Flugzeugtraktor nach einem der vorangehenden Ansprüche,
dadurch **gekennzeichnet**, daß
ein elektromechanischer Sperrmechanismus (506) zum Sichern des genannten Fangarmes (503; 605; 714) verwendet ist.

## Revendications

1. Tracteur pour avions comportant
des moyens d'accrochage (402; 501; 600) destinés à recevoir le train avant (403) d'un avion (201) selon une direction longitudinale à peu près parallèle audit train avant (403), lesdits moyens d'accrochage étant munis d'un premier élément de support pour ledit train avant agencé transversalement par rapport à ladite direction longitudinale, et pouvant être déplacé dans ladite direction longitudinale, et pouvant être fixé au niveau d'un emplacement prédéterminé le long de celui-ci, et étant munis d'un second élément de support qui est relié de manière pivotante par l'intermédiaire d'une liaison pivotante positionnée au niveau d'une première extrémité desdits moyens d'accrochage à un châssis (410) du tracteur pour avions,
des moyens de serrage (406; 717) reliés auxdits moyens d'accrochage pour fixer ledit train avant (403) auxdits moyens d'accrochage et comportant des moyens (411) formant dispositif de positionnement pour faire pivoter lesdits moyens de serrage en direction dudit train avant, et
des moyens de levage (404; 716) pour élever lesdits moyens d'accrochage par rapport au châssis (410) dudit tracteur et pour élever verticalement lesdits moyens de serrage avec ledit train avant (403) lorsque celui-ci est positionné entre lesdits moyens d'accrochage et lesdits moyens de serrage (406; 717)
caractérisé en ce que
ledit premier élément de support comporte une barre transversale (401; 500; 602; 711), tandis que ledit second élément de support comporte un bras d'accrochage (503; 605; 714) pouvant pivoter autour d'un axe de pivotement (504; 606) dans un plan horizontal dans une position rapprochée,
lesdits moyens d'accrochage (402; 501; 600) sont reliés de manière pivotante audit châssis (410) dudit tracteur par l'intermédiaire d'axes de pivotement (405),
lesdits moyens (404; 716) de levage sont reliés auxdits moyens d'accrochage au niveau d'une seconde extrémité de ceux-ci éloignée desdits axes de pivotement (405) sur ledit tracteur, de manière à faire pivoter ladite barre transversale (401; 500; 602; 711), ledit bras d'accrochage (503; 605; 714) et lesdits moyens de serrage (406; 417) autour desdits axes de pivotement (405) en réponse auxdits moyens de levage (404; 716),
et lesdits moyens de serrage comportent des bras de serrage (412; 717) pouvant pivoter comportant une broche pouvant être étendue d'une manière telle que les bras de serrage (412; 717) peuvent pivoter et lesdites broches pouvant être étendues peuvent être étendues pour venir au-dessus de la partie supérieure dudit train avant (403) et appuyer fermement lesdits bras de serrage (412; 717) contre ledit train avant (403) et par conséquent serrer fermement celui-ci vers le bas contre ladite barre transversale (401; 500; 602; 711) et ledit bras d'accrochage (503; 605; 714) lorsque ceux-ci se trouvent dans une position étendue et pivotée adéquate.

2. Tracteur pour avions selon la revendication 1, caractérisé en ce que
lesdits bras de serrage (412; 717) sont fixés de manière pivotante sur un cadre (402; 701) pour que lesdits moyens de levage (404; 716) permettent une rotation partielle de ladite zone de serrage (412; 717) dans un plan perpendiculaire à l'axe central longitudinal dudit cadre (402; 701).

3. Tracteur pour avions selon la revendication 1 ou 2, caractérisé en ce que
ledit bras d'accrochage (503; 605; 714) pivotant et/ou ladite barre transversale (401; 500; 602; 711) et/ou les bras de serrage (412; 717) sont commandés par un actionneur hydraulique (404; 502; 505).

4. Tracteur pour avions selon l'une quelconque des revendications précédentes, caractérisé en ce qu'un mécanisme de verrouillage (506) électromécanique est utilisé pour fixer ledit bras d'accrochage (503; 605; 714).
